(19) Europäisches Patentamt
European Patent Office
Office européen des brevets

(11) EP 2 573 842 B1

(12) EUROPEAN PATENT SPECIFICATION

(45) Date of publication and mention of the grant of the patent:
**15.02.2017 Bulletin 2017/07**

(21) Application number: **12178553.9**

(22) Date of filing: **30.07.2012**

(51) Int Cl.:
***H01M 4/134*** *(2010.01)*
***H01M 4/133*** *(2010.01)*
***H01M 4/38*** *(2006.01)*
***H01M 4/583*** *(2010.01)*
***H01M 4/58*** *(2010.01)*
***H01M 4/1395*** *(2010.01)*
***H01M 4/1393*** *(2010.01)*
***H01M 4/36*** *(2006.01)*
***H01M 10/052*** *(2010.01)*

(54) **Negative active material for rechargeable lithium battery, method preparing the same and rechargeable lithium battery including the same**

Negativ-Aktivmaterial für eine wiederaufladbare Lithiumbatterie, Herstellungsverfahren dafür und wiederaufladbare Lithiumbatterie damit

Matériau actif négatif pour batterie au lithium rechargeable, procédé de préparation de celui-ci et batterie au lithium rechargeable comprenant celui-ci

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.09.2011 US 201161537309 P**
**05.04.2012 US 201213440918**

(43) Date of publication of application:
**27.03.2013 Bulletin 2013/13**

(73) Proprietor: **Samsung SDI Co., Ltd.**
**Gyeonggi-do (KR)**

(72) Inventors:
- **Park, Sang-Eun**
  **Gyeonggi-do (KR)**
- **Kim, Young-Ugk**
  **Gyeonggi-do (KR)**

(74) Representative: **Mounteney, Simon James**
**Marks & Clerk LLP**
**90 Long Acre**
**London**
**WC2E 9RA (GB)**

(56) References cited:
**EP-A1- 2 372 816**
**EP-A1- 2 372 817**
**US-A1- 2002 164 479**
**US-A1- 2010 288 970**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

## BACKGROUND OF THE INVENTION

### (a) Field of the Invention

A negative active material for a rechargeable lithium battery and a rechargeable lithium battery including the same are related.

### (b) Description of the Related Art

A lithium rechargeable battery has recently drawn attention as a power source for a small portable electronic device. It uses an organic electrolyte solution and thereby has twice the discharge voltage of a conventional battery using an alkali aqueous solution and as a result, has high energy density.

For positive active materials of a rechargeable lithium battery, lithium-transition element composite oxides being capable of intercalating lithium, such as $LiCoO_2$, $LiMn_2O_4$, $LiNi_{1-x}Co_xO_2$ ($0<x<1$), and so on, have been researched.

As for negative active materials of a rechargeable lithium battery, various carbon-based materials such as artificial graphite, natural graphite, and hard carbon, which can intercalate and deintercalate lithium ions. However, recently there has been research into non-carbon-based negative active materials such as Si in accordance with need for stability and high-capacity.

EP2372816, EP2372817 and US2002/0164479 disclose negative electrode materials for a secondary battery.

## SUMMARY OF THE INVENTION

One embodiment of the present invention provides a negative active material for a rechargeable lithium battery being capable of improving cycle-life of a rechargeable lithium battery.

Another embodiment of the present invention provides a rechargeable lithium battery including the negative active material.

According to the present invention, provided is a negative active material for a rechargeable lithium battery that includes a core including a $SiO_2$ matrix and a Si grain and a coating layer continuously or discontinuously coating the core, wherein the coating layer includes SiC and C; and wherein the peak area ratio of SiC (111) plane to Si (111) plane during X-ray diffraction analysis (XRD) using CuKα ray ranges from 0.10 to 0.50.

According to one embodiment of the present invention, provided is a negative active material for a rechargeable lithium battery as defined above prepared by a method comprising:

preparing core particles including grains of silicon in a matrix of $SiO_2$;
etching an outer surface of the core particles with an etchant;
at least partially coating the outer surface of the etched core particles with carbon to form a coating layer; wherein the etching satisfies the following:

$$0.14 \leq \text{(etching time)} * \text{(etching strength)} < 144;$$

wherein the etching strength is the molar amount of fluorine ions in the etchant or fluorine ion-equivalent molar amount of an etchant not containing fluorine ions which results in the same etching strength as the fluorine ion etching strength.

The core may have a content ratio of $SiO_2$ matrix and Si grain to be represented by $SiO_X$ ($0.3 \leq x \leq 1.2$).

The negative active material may have an average particle size (D50) of 0.5 μ m to 50 μ m, optionally from 1 μm to 10 μm.

The coating layer may have a thickness of 0.01 μ m to 1 μ m, optionally from 0.02 μm to 0.2 μm, optionally from 0.03 μm to 0.06 μm.

The weight ratio of the core to the coating layer may range from 99.9:0.1 to 90:10, optionally from 99:1 to 95:5.

According to another embodiment of the present invention, provided is a rechargeable lithium battery that includes a negative electrode including the negative active material as defined above; a positive electrode including a positive active material being capable of intercalating and deintercalating lithium; and a non-aqueous electrolyte.

According to yet another embodiment of the present invention, provided is a method of manufacturing a negative

active material for a rechargeable lithium battery that includes a preparing a silicon oxide powder including $SiO_2$ matrix and Si grain; impregnating the silicon oxide powder into an etchant to be etched; and surface-treating the etched silicon oxide powder using a carbon raw material according to a vapor method or a liquid method to provide a carbon coating layer.

The silicon oxide powder may be impregnated in an etchant for 0.5 minutes to 120 minutes to be etched, preferably 0.5 minutes to 45 minutes, more preferably 0.75 minutes to 40 minutes, more preferably 1 minute to 30 minutes. For example, preferred etching times are between 5 minutes to 40 minutes, more preferably between 10 minutes and 30 minutes.

In order to provide the etched silicon oxide powder with a carbon coating layer, it was performed with a surface treatment using a reaction gas of carbon raw material at 700° C to 1300° C according to vapor method. According to liquid method, the surface of etched silicon oxide powder is liquid-coated with the carbon raw material and carbonized at 800° C to 1300 ° C to provide the etched silicon oxide powder with a carbon coating layer.

The etchant may be an acid solution or a compound including fluorine ions, such as HF, $NH_4F$, $NH_4HF_2$, and so on.

If the compound including fluorine ions is used for the etchant, the fluorine ion concentration of the etchant solution may be 0.5M to 15M, preferably 0.5M to 12M, more preferably 0.75M to 7.5M to etch at least a portion of the $SiO_2$ matrix. For example, 1 M to 6M, 1 M to 4M or 1.5M to 3M.

According to the invention, there is provided a negative active material for a rechargeable lithium battery comprising: particles comprising a core including grains of silicon in a matrix of $SiO_2$ and a coating layer at least partially coating the core, wherein the coating layer includes SiC and carbon; and wherein the peak area ratio of SiC (111) plane to Si (111) plane during X-ray diffraction analysis (XRD) using CuK$\alpha$ ray ranges from 0.10 to 0.50. Preferred features of this aspect are set out in claims 2 to 5.

According to another aspect of the invention, there is provided a method of manufacturing a negative active material for a rechargeable lithium battery as defined above, the method comprising: preparing core particles including grains of silicon in a matrix of $SiO_2$; etching an outer surface of the core particles with an etchant; at least partially coating the outer surface of the etched core particles with carbon to form a coating layer;. wherein the etching satisfies the following: $0.14 \leq$ (etching time) * (etching strength) <144; wherein the etching strength is a molar amount of either fluorine ions in the etchant or a fluorine ion equivalent molar amount of an etchant not containing fluorine ions. Preferred features of this aspect are set out in claims 9 to 14.

In such embodiments, the etching strength is expressed as a molar amount equivalent to a molar amount of fluorine ions. It will be appreciated that a given molar amount of fluorine ions in an etchant has certain etchant strength for etching core particles including grains of silicon in a matrix of $SiO_2$. Other etchants not containing fluorine ions will have other strengths for etching core particles including grains of silicon in a matrix of $SiO_2$, and it is simple to convert a molar amount of an etchant not containing fluorine ions into an equivalent molar amount of fluorine ions.

The rechargeable lithium battery including the negative active material has excellent cycle-life characteristics.

## BRIEF DESCRIPTION OF THE DRAWINGS

FIG. 1 is a schematic view of a rechargeable lithium battery according to one embodiment of the present invention.

FIG. 2 shows results of XRD for the negative active materials obtained from Examples and Comparative Examples.

FIG. 3 is a graph of evaluating cycle-life characteristics of rechargeable lithium batteries fabricated using the negative active materials obtained from Examples and Comparative Examples.

## DETAILED DESCRIPTION

Embodiments of the present invention will hereinafter be described in detail. However, these embodiments are only embodiments, and the present invention is not limited thereto.

According to one embodiment of the present invention, there is provided is a negative active material for a rechargeable lithium battery that includes a coating layer including a core including a $SiO_2$ matrix and a Si grain and a coating layer continuously or discontinuously coating the core. The coating layer includes a SiC and a carbon.

SiC included in the negative active material may be beneficial for cycle-life characteristics but adverse affecting on capacity or efficiency. The negative active material includes an appropriate amount of SiC, so it may improve the cycle-life characteristics without decreasing the capacity or efficiency characteristics.

The negative active material includes a SiC content to provide a certain ranged XRD peak area ratio. The peak area ratio of SiC (111) plane to Si (111) plane during X-ray diffraction analysis (XRD) using a CuK$\alpha$ ray ranges from 0. 1 to 0.50. The peak area ratio of SiC (111) plane to Si (111) plane during X-ray diffraction analysis (XRD) using CuK$\alpha$ ray may preferably range from 0.10 to 0.45. In embodiments of the present invention the peak ratio may preferably be

from 0.11 to 0.30 and from 0.20 to 0.45.

In a preferred embodiment of the present invention, the first peak (Si (111)) is at 28.4 ± 0.2 degrees 2θ. In a preferred embodiment of the present invention, the second peak (SiC (111) is at 35.7 ± 0.2 degrees 2θ. In the present invention it is the ratio of these peaks that is between 0.10 to 0.50

In a preferred embodiment of the present invention the XRD analysis is carried out using:

Equipment: Bruker, D8 Advance
Equipment setting: 40 kV & 40 mA
Target and wavelength: Cu a source, Cu K α average (1.5418Å)
Scan mode, step interval: θ/2θ scan, 0.01 ° step, 3sec/step
Slit system: D.S. = A.S.S. =0.5 deg

The core of negative active material preferably includes a $SiO_2$ matrix and a Si grain and may be represented by $SiO_X$ ($0.3 \leq x \leq 1.2$). The range of X may be determined by the content ratio of $SiO_2$ matrix and Si grain. The core of the active material preferably comprises a Si grain to $SiO_2$ molar ratio of between 2.0:1.0 and 1.0:2.0, preferably 1.5:1.0 and 1.0:1.5, most preferably 1.0:1.0.

The carbon included in the coating layer may include crystalline carbon or amorphous carbon or the like. For example, the crystalline carbon may include graphite such as amorphous, sheet, flake, spherical shaped, or fiber shaped natural graphite or artificial graphite; and the amorphous carbon may include soft carbon (low temperature fire carbon) or hard carbon, mesophase pitch carbonized products, fired coke or the like.

The negative active material may have an average particle size (D50) of 0.5 μ m to 50 μ m, optionally from 1 μm to 10 μm; and the coating layer may have a thickness of 0.01 μ m to 1 μ m, optionally from 0.02 μm to 0.2 μm, optionally from 0.03 μm to 0.06 μm. When the coating layer has a thickness within the range, it may prevent cycle-life degradation caused by increasing resistance as well as ensuring the sufficiency coating efficiency, so as to expect the effective coating effect. The negative active material may have a weight ratio of the core to the coating layer of 99.9:0.1 to 90:10, optionally from 99:1 to 95.

The average particle size (D50) of the negative active material used in the present invention may preferably be measured using a laser diffraction light scattering diameter distribution measurement method. Preferably, a Mastersizer 2000 (Malvern Instruments) laser diffractometer is used. The Mastersizer 2000 calculates the particle size distribution (and therefore the 50th percentile of this distribution - the D50) by volume as a default setting. This is the primary result calculation using Mie theory. When carrying out the measurement of the above parameters using a Mastersizer 2000 preferably a dispersant is used, preferably ethanol (preferably 99.9% purity) is used as the dispersant. If ethanol is used as a dispersant, the relative refractive index of ethanol is taken as between 1.33 and 1.40, preferably 1.36. Preferably the refractive index of the negative active material, and for ethanol, is measured by the standard method, e.g. measurements are taken at yellow doublet sodium D line, with a wavelength of 589 nanometres, at 298.15 K and 100 kPa. Preferably, sonication for between 1 and 3 minutes, preferably 2 minutes, to aid dispersion is carried out. Sonication is preferably carried out between 1 kHz and 10KHz, preferably at 5kHz. The absorption index value is preferably set between 0.5 and 1.5, preferably a value of 1.0 is used.

The thickness of the coating layer is preferably measured using a transmission electron microscope (TEM), preferably the thickness is measured from transmission electron microscope (TEM) images.

The coating layer at least partially covers the core, preferably the coating layer covers between 100% and 10% of the surface are of the core, more preferably the coating layer covers between 100% and 20% 100% and 30%, 100% and 50%, 100% and 60%, 100% and 70% or 100% and 80%, for example between 95% and 20%, 90% and 30%, 75% and 50%.

The method of manufacturing the negative active material may include preparing a silicon oxide powder including $SiO_2$ matrix and Si grain; impregnating the silicon oxide powder in an etchant for 0.5 minutes to 120 minutes to be etched; and surface treating the etched silicon oxide powder using a carbon raw material to provide a carbon coating layer.

The negative active material obtained from the manufacturing method may prepare the negative active material according to a method of manufacturing a negative active material.

First, a silicon oxide powder including $SiO_2$ matrix and Si grain is prepared. In this case, the method of preparing a silicon oxide powder including $SiO_2$ matrix and Si grain may be according to the known method and not be limited to the specific method.

When the silicon oxide powder is impregnated in an etchant, $SiO_2$ is selectively etched. $SiO_2$ may be etched in some degree depending upon the etching time and the concentration of the etchant solution. In order to prepare the negative active material, it may be etched by impregnating in the etchant for 0.5 minutes to 120 minutes, preferably 0.5 minutes to 45 minutes, more preferably 0.75 minutes to 40 minutes, more preferably 1 minute to 30 minutes. For example, preferred etching times are between 5 minutes to 40 minutes, more preferably between 10 minutes and 30 minutes. The etchant may be an acid solution or a compound including fluorine ions, such as HF, $NH_4F$, $NH_4HF_2$, and so on.

If a compound including fluorine ions is used for the etchant, fluorine ion concentration of the etchant solution may be 0.5M to 15M, preferably 0.5M to 12M, more preferably 0.75M to 7.5M to etch at least a portion of the $SiO_2$ matrix. For example, 1 M to 6M, 1 M to 4M or 1.5M to 3M. The skilled in the art may adjust the concentration of another acid solution as an etchant to obtain the similar degree of an etching effect of the compound including fluorine ions as an etchant. It will be appreciated that the amount of etching of the core particles including grains of silicon in a matrix of $SiO_2$ will depend on the etching time and the etching strength. Etching strength will depend on the concentration of the etchant and the type of etchant used. In order to achieve a desirable amount of etching, the relationship between etching time and etching strength may satisfies the following equation:

$$0.14 \leq \text{(etching time)} * \text{(etching strength)} < 144.$$

In the above equation, etching time is expressed in minutes.

In the above equation, "etching strength" is expressed as a molar amount of either fluorine ions in the etchant or a fluorine ion equivalent molar amount of an etchant not containing fluorine ions which results in the same etching strength as the fluorine ions. In other words, etching strength is an equivalent etching molar amount of fluorine ions.

Preferably values of (etching time) * (etching strength) are between 0.14 and 140, preferably between 0.25 and 100, more preferably between 0.4 and 75. In embodiments of the present invention preferred ranges of (etching time) * (etching strength) may be between 0.25 and 25 or between 50 and 100.

It will be appreciated that an etchant with a given concentration of fluorine ions has certain etchant strength for etching core particles including grains of silicon in a matrix of $SiO_2$. Other etchants not containing fluorine ions will have other strengths for etching core particles including grains of silicon in a matrix of $SiO_2$, and it is simple to convert a concentration of an etchant not containing fluorine ions into an equivalent concentration of fluorine ions.

The etching time and concentration are selected to meet the requirement of the above equation. Preferred combinations in this regard are 0.5M to 15M, preferably 0.5M to 12M, more preferably 0.75M to 7.5M, for example, 1 M to 6M, 1 M to 4M or 1.5M to 3M, for a time period of 0.5 minutes to 120 minutes, preferably 0.5 minutes to 45 minutes, more preferably 0.75 minutes to 40 minutes, more preferably 1 minute to 30 minutes. For example, preferred etching times are between 5 minutes to 40 minutes, more preferably between 10 minutes and 30 minutes.

When the etched silicon oxide powder is provided with a carbon coating layer, Si of silicon oxide powder surface is reacted with carbon to provide SiC. Accordingly, the carbon coating layer may include SiC as well as carbon (C). Since $SiO_2$ is removed on the surface of the etched silicon oxide powder, SiC is more easily formed. In this case, the content of SiC may be controlled by adjusting the carbon coating-treatment temperature.

In the case of providing a carbon coating layer according to the vapor method, the carbon raw material may be injected as a reaction gas at 700 to 1300° C, particularly, 950 to 1050° C to provide a carbon coating layer on the surface of etched silicon oxide powder. The vapor method may include a chemical vapor deposition (CVD) method or the like.

When the carbon coating layer is formed according to a liquid method, the carbon raw material is liquid coated on the surface of etched silicon oxide powder and carbonized at 800 to 1300° C, particularly, 1000 to 1100° C to provide a carbon coating layer. The liquid method may include impregnating method, spraying method, or the like. The solvent of liquid coating may include DMSO (dimethylsulfoxide), THF (tetrahydrofuran) or the like.

The carbon raw material may include coal pitch, mesophase pitch, petroleum pitch, coal oil, petroleum heavy oil, a polymer resin such as a phenol resin, a furan resin, a polyimide resin or the like, but it is not limited thereto. Particularly, it may be selected from a vinyl-based resin such as polyvinylidene fluoride (PVDF), polyvinylchloride (PVC) or the like, a conductive polymer such as polyaniline (PAn), polyacetylene, polypyrrole, polythiophene or the like. The conductive polymer may be a conductive polymer doped using hydrochloric acid or the like.

According to another embodiment of the present invention, a rechargeable lithium battery includes a negative electrode including the negative active material; a positive electrode including a positive active material being capable of intercalating and deintercalating lithium; and a non-aqueous electrolyte.

Rechargeable lithium batteries may be classified into lithium ion batteries, lithium ion polymer batteries, and lithium polymer batteries according to the presence of a separator and the kind of electrolyte used in the battery. The rechargeable lithium batteries may have a variety of shapes and sizes, and include cylindrical, prismatic, or coin-type batteries, and may be thin film batteries or may be rather bulky in size. Structures and fabrication methods for lithium ion batteries are well known in the art.

FIG. 1 is an exploded perspective view of a rechargeable lithium battery in accordance with an embodiment of the present invention. Referring to FIG. 1, the rechargeable lithium battery 100 is formed with a cylindrical shape and includes a negative electrode 112, a positive electrode 114, a separator 113 disposed between the a positive electrode 114 and negative electrode 112, an electrolyte (not shown) impregnated in the negative electrode 112, the positive

electrode 114, and the separator 113, a battery case 120, and sealing member 140 sealing the battery case 120. The rechargeable lithium battery 100 is fabricated by sequentially stacking a negative electrode 112, a positive electrode 114, and separator 113, and spiral-winding them and housing the wound product in the battery case 120.

The negative electrode includes a current collector and a negative active material layer formed over the current collector, and the negative active material layer includes the negative active material described above.

The negative active material is the same as described above.

The negative active material layer may include a binder, and optionally may further include a conductive material.

The binder improves binding properties of the negative active material particles to each other and to a current collector. Examples of the binder include at least one selected from the group consisting of polyvinylalcohol, carboxylmethylcellulose, hydroxypropylcellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon and the like, but are not limited thereto.

Any electrically conductive material may be used as a conductive material unless it causes a chemical change. Examples of the conductive material include: carbon-based materials such as natural graphite, artificial graphite, carbon black, acetylene black, ketjen black, a carbon fiber, and the like; a metal-based material of a metal powder or a metal fiber including copper, nickel, aluminum, silver, and the like; a conductive polymer such as a polyphenylene derivative; and mixtures thereof.

The current collector may be selected from the group consisting of a copper foil, a nickel foil, a stainless steel foil, a titanium foil, a nickel foam, a copper foam, a polymer substrate coated with a conductive metal, and combinations thereof.

The positive electrode includes a current collector and a positive active material layer disposed on the current collector.

The positive active material includes lithiated intercalation compounds that reversibly intercalate and deintercalate lithium ions. The positive active material may include a composite oxide including at least one selected from the group consisting of cobalt, manganese, and nickel, as well as lithium. In particular, the following lithium-containing compounds may be used:

$Li_aA_{1-b}R_bD_2$ (wherein, in the above formula, $0.90 \leq a \leq 1.8$ and $0 \leq b \leq 0.5$); $Li_aE_{1-b}R_bO_{2-c}D_c$ (wherein, in the above formula, $0.90 \leq a \leq 1.8$, $0 \leq b \leq 0.5$ and $0 \leq c \leq 0.05$); $LiE_{2-b}R_bO_{4-c}D_c$ (wherein, in the above formula, $0 \leq b \leq 0.5$, $0 \leq c \leq 0.05$); $Li_aNi_{1-b-c}Co_bR_cD_\alpha$ (wherein, in the above formula, $0.90 \leq a \leq 1.8$, $0 \leq b \leq 0.5$, $0 \leq c \leq 0.05$ and $0 < \alpha \leq 2$); $Li_aNi_{1-b-c}Co_bR_cO_{2-\alpha}Z_\alpha$ (wherein, in the above formula, $0.90 \leq a \leq 1.8$, $0 \leq b \leq 0.5$, $0 \leq c \leq 0.05$ and $0 < \alpha < 2$); $Li_aNi_{1-b-c}Co_bR_cO_{2-\alpha}Z_2$ (wherein, in the above formula, $0.90 \leq a \leq 1.8$, $0 \leq b \leq 0.5$, $0 \leq c \leq 0.05$ and $0 < \alpha < 2$); $Li_aNi_{1-b-c}Mn_bR_cD_\alpha$ (wherein, in the above formula, $0.90 \leq a \leq 1.8$, $0 \leq b \leq 0.5$, $0 \leq c \leq 0.05$ and $0 < \alpha \leq 2$); $Li_aNi_{1-b-c}Mn_bR_cO_{2-\alpha}Z_\alpha$ (wherein, in the above formula, $0.90 \leq a \leq 1.8$, $0 \leq b \leq 0.5$, $0 \leq c \leq 0.05$ and $0 < \alpha < 2$); $Li_aNi_{1-b-c}Mn_bR_cO_{2-\alpha}Z_2$ (wherein, in the above formula, $0.90 \leq a \leq 1.8$, $0 \leq b \leq 0.5$, $0 \leq c \leq 0.05$ and $0 < \alpha < 2$); $Li_aNi_bE_cG_dO_2$ (wherein, in the above formula, $0.90 \leq a \leq 1.8$, $0 \leq b \leq 0.9$, $0 \leq c \leq 0.5$ and $0.001 \leq d \leq 0.1$); $Li_aNi_bCo_cMn_dGeO_2$ (wherein, in the above formula, $0.90 \leq a \leq 1.8$, $0 \leq b \leq 0.9$, $0 \leq c \leq 0.5$, $0 \leq d \leq 0.5$ and $0.001 \leq e \leq 0.1$); $Li_aNiG_bO_2$ (wherein, in the above formula, $0.90 \leq a \leq 1.8$ and $0.001 \leq b \leq 0.1$); $Li_aCoG_bO_2$ (wherein, in the above formula, $0.90 \leq a \leq 1.8$ and $0.001 \leq b \leq 0.1$); $Li_aMnG_bO_2$ (wherein, in the above formula, $0.90 \leq a \leq 1.8$ and $0.001 \leq b \leq 0.1$); $Li_aMn_2G_bO_4$ (wherein, in the above formula, $0.90 \leq a \leq 1.8$ and $0.001 \leq b \leq 0.1$); $QO_2$; $QS_2$; $LiQS_2$; $V_2O_5$; $LiV_2O_5$; $LiTO_2$; $LiNiVO_4$; $Li_{(3-f)}J_2(PO_4)_3$ $(0 \leq f \leq 2)$; $Li_{(3-f)}Fe_2(PO_4)_3$ $(0 \leq f \leq 2)$; and $LiFePO_4$.

In the above chemical formulae, A is Ni, Co, Mn, or a combination thereof; R is Al, Ni, Co, Mn, Cr, Fe, Mg, Sr, V, a rare earth element, or a combination thereof; D is O, F, S, P, or a combination thereof; E is Co, Mn, or a combination thereof; Z is F, S, P, or a combination thereof; G is Al, Cr, Mn, Fe, Mg, La, Ce, Sr, V, or a combination thereof; Q is Ti, Mo, Mn, or a combination thereof; T는 Cr, V, Fe, Sc, Y, or a combination thereof; and J is V, Cr, Mn, Co, Ni, Cu, or a combination thereof.

The compound can have a coating layer on the surface, or can be mixed with a compound having a coating layer. The coating layer may include at least one coating element compound selected from the group consisting of an oxide of a coating element, a hydroxide of a coating element, an oxyhydroxide of a coating element, an oxycarbonate of a coating element, and a hydroxyl carbonate of a coating element. The compounds for a coating layer can be amorphous or crystalline. The coating element for a coating layer may include Mg, Al, Co, K, Na, Ca, Si, Ti, V, Sn, Ge, Ga, B, As, Zr, or a mixture thereof. The coating layer can be formed in a method having no negative influence on properties of a positive active material by including these elements in the compound. For example, the method may include any coating method such as spray coating, dipping, and the like, but is not illustrated in more detail, since it is well-known to those who work in the related field.

The positive active material layer may include a binder and a conductive material.

The binder improves binding properties of the positive active material particles to each other and to a current collector. Examples of the binder include at least one selected from the group consisting of polyvinyl alcohol, carboxylmethyl cellulose, hydroxypropyl cellulose, diacetyl cellulose, polyvinylchloride, carboxylated polyvinyl chloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The conductive material is used to provide conductivity to an electrode. In the battery including the same, it may include any electronic conductive material as long as causing no chemical change. For example, it may include natural graphite, artificial graphite, carbon black, acetylene black, ketjen black, carbon fiber, metal powder, metal fiber or the like such as copper, nickel, aluminum, silver or the like, or one or at least one kind mixture of conductive material such as polyphenylene derivative or the like.

The current collector may be Al, but is not limited thereto.

The negative and positive electrodes may be fabricated by a method including mixing the active material, a conductive material, and a binder into an active material composition, and coating the composition on a current collector, respectively. The electrode manufacturing method is well known, and thus is not described in detail in the present specification. The solvent includes N-methylpyrrolidone and the like, but is not limited thereto.

The electrolyte includes a non-aqueous organic solvent and a lithium salt.

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, or aprotic solvent. Examples of the carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylmethyl carbonate (EMC), ethylene carbonate (EC), propylene carbonate (PC), butylene carbonate (BC), or the like. Examples of the ester-based solvent may include methyl acetate, ethyl acetate, n-propyl acetate, methylpropionate, ethylpropionate, $\gamma$-butyrolactone, decanolide, valerolactone, mevalonolactone, caprolactone, or the like.

Examples of the ether-based solvent include dibutyl ether, tetraglyme, diglyme, dimethoxyethane, 2-methyltetrahydrofuran, tetrahydrofuran, or the like, and examples of the ketone-based solvent include cyclohexanone, or the like. Examples of the alcohol-based solvent include ethyl alcohol, isopropyl alcohol, and the like, and examples of the aprotic solvent include nitriles such as R-CN (wherein R is a C2 to C20 linear, branched, or cyclic hydrocarbon group including a double bond, an aromatic ring, or an ether bond), amides such as dimethylformamide, dioxolanes such as 1,3-dioxolane, sulfolanes, or the like.

The non-aqueous organic solvent may be used singularly or in a mixture. When the organic solvent is used in a mixture, the mixture ratio can be controlled in accordance with a desirable battery performance.

The carbonate-based solvent is prepared by mixing a cyclic carbonate and a linear carbonate. The cyclic carbonate and the linear carbonate are mixed together in the volume ratio of 1:1 to 1:9. Within this range, performance of electrolyte may be improved.

In addition, the non-aqueous organic electrolyte may be further prepared by mixing a carbonate-based solvent with an aromatic hydrocarbon-based solvent. The carbonate-based and the aromatic hydrocarbon-based solvents may be mixed together in a volume ratio ranging from 1:1 to 30:1.

The aromatic hydrocarbon-based organic solvent may be represented by the following Chemical Formula 1.

[Chemical Formula 1]

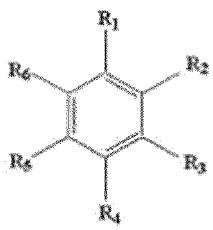

In Chemical Formula 1, $R_1$ to $R_6$ are each independently hydrogen, a halogen, a C1 to C10 alkyl group, a C1 to C10 haloalkyl group, or a combination thereof.

The aromatic hydrocarbon-based organic solvent may include benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 1,2-difluorotoluene, 1,3-difluorotoluene, 1,4-difluorotoluene, 1,2,3-trifluorotoluene, 1,2,4-trifluorotoluene, chlorotoluene, 1,2-dichlorotoluene, 1,3-dichlorotoluene, 1,4-dichlorotoluene, 1,2,3-trichlorotoluene, 1,2,4-trichlorotoluene, iodotoluene, 1,2-diiodotoluene, 1,3-diiodotoluene, 1,4-diiodotoluene, 1,2,3-triiodotoluene, 1,2,4-triiodotoluene, xylene, or a combination thereof.

The non-aqueous electrolyte may further include vinylene carbonate, an ethylene carbonate-based compound represented by the following Chemical Formula 2, or a combination thereof to improve cycle-life as an additive.

[Chemical Formula 2]

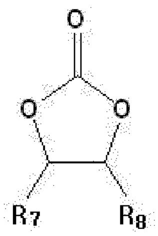

In Chemical Formula 2, $R_7$ and $R_8$ are independently selected from hydrogen, hydrogen, a halogen, a cyano group (CN), a nitro group ($NO_2$), and a C1 to C5 fluoroalkyl group, provided that at least one of $R_7$ and $R_8$ is selected from a halogen, a cyano group (CN), a nitro group ($NO_2$), and a C1 to C5 fluoroalkyl group.

Examples of the ethylene carbonate-based compound include difluoroethylene carbonate, chloroethylene carbonate, dichloroethylene carbonate, bromoethylene carbonate, dibromoethylene carbonate, nitroethylene carbonate, cyanoethylene carbonate, fluoroethylene carbonate, and the like. The amount of the vinylene carbonate or the ethylene carbonate-based compound used to improve cycle life may be adjusted within an appropriate range.

The lithium salt is dissolved in an organic solvent, supplies lithium ions in a battery, operates a basic operation of the rechargeable lithium battery, and improves lithium ion transportation between positive and negative electrodes therein. Examples of the lithium salt include $LiPF_6$, $LiBF_4$, $LiSbF_6$, $LiAsF_6$, $LiC_4F_9SO_3$, $LiClO_4$, $LiAlO_2$, $LiAlCl_4$, $LiN(C_xF_{2x+1}SO_2)(C_yF_{2y+1}SO_2)$, (where x and y are natural numbers), LiCl, LiI, $LiB(C_2O_4)_2$ (lithium bis(oxalato) borate, LiBOB), or a combination thereof, as a supporting electrolytic salt. The lithium salt may be used in a concentration ranging from 0.1 M to 2.0 M. When the lithium salt is included at the above concentration range, an electrolyte may have excellent performance and lithium ion mobility due to optimal electrolyte conductivity and viscosity.

A separator 113 may include any materials commonly used in the conventional lithium battery as long as separating a negative electrode 112 from a positive electrode 114 and providing a transporting passage of lithium ion. In other words, it may have a low resistance to ion transport and an excellent impregnation for electrolyte. For example, it may be selected from glass fiber, polyester, TEFLON (tetrafluoroethylne), polyethylene, polypropylene, polytetrafluoroethylene (PTFE), or a combination thereof. It may have a form of a non-woven fabric or a woven fabric. For example, for the lithium ion battery, polyolefin-based polymer separator such as polyethylene, polypropylene or the like is mainly used. In order to ensure the heat resistance or mechanical strength, a coated separator including a ceramic component or a polymer material may be used. Selectively, it may have a mono-layered or multi-layered structure.

The following examples illustrate the present invention in more detail. These examples, however, should not in any sense be interpreted as limiting the scope of the present invention.

**Example**

Example 1: Preparation of negative active material

50 g of silicon oxide powder (mole ratio 1:1) comprising nano Si grains dispersed in silica ($SiO_2$) matrix was supported in 400 mL of 1 M HF aqueous solution for 1 minute to remove the surface $SiO_2$. After completing the $SiO_2$ removal reaction, the remaining impurities were removed using a vacuum filter and dried. The dried silicon oxide powder was vapor carbon-coated by injecting methane gas at 1000° C for one hour using a rotary kiln. After completing the reaction, the coated powder was collected. The particle size (D50) of the coated powder was 5$\mu$m (as measured in all examples by a Malvern Mastersizer 2000) and the thickness of the carbon coating layer of the particle was 50nm (as measured in all examples by TEM).

Example 2: Preparation of negative active material

Powder was collected in accordance with the same procedure as in Example 1, except that it was supported in 400 mL of HF aqueous solution (3M HF) for 10 minutes for etching. The particle size (D50) of the coated powder was 5$\mu$m and the thickness of the carbon coating layer of the particle was 50nm.

Example 3: Preparation of negative active material

Powder was collected in accordance with the same procedure as in Example 1, except that was supported in 400 mL of HF aqueous solution (6M HF) for 30 minutes for etching. The particle size (D50) of the coated powder was 5$\mu$m and the thickness of the carbon coating layer of the particle was 50nm.

Comparative Example 1: Preparation of negative active material

50 g of silicon oxide powder (mole ratio 1:1) comprising nano Si grains dispersed in silica ($SiO_2$) matrix was vapor carbon-coated by injecting methane gas at 1000° C for one hour using a rotary kiln. After the reaction, the coated powder was collected. The particle size (D50) of the coated powder was 5$\mu$m and the thickness of the carbon coating layer of the particle was 50nm.

Comparative Example 2: Preparation of negative active material

Powder was collected in accordance with the same procedure as in Example 1, except that was supported in HF aqueous solution (12M HF) for 30 minutes for etching. The particle size (D50) of the coated powder was 5$\mu$m and the thickness of the carbon coating layer of the particle was 50nm.

**(Experimental Example 1: Measurement of X-ray diffraction analysis (XRD))**

Using negative active materials obtained from Example 1, Example 2, Example 3, Comparative Example 1, and Comparative Example 2, X-ray diffraction analysis (XRD) was performed. From the XRD measurement results, the peak area ratio to SiC (111) plane to Si (111) plane was shown in the following Table 1.

[XRD analysis condition]

Equipment: Bruker, D8 Advance
Equipment setting: 40 kV & 40 mA
Target and wavelength: Cu a source, Cu K $\alpha$ average (1.5418Å)
Scan mode, step interval: $\theta/2\theta$ scan, 0.01 ° step, 3sec/step
Slit system: D.S. = A.S.S. =0.5 deg

FIG. 2 is a graph showing XRD measurement results for Example 1, Example 3, and Comparative Example 1.

**(Experimental Example 2: Evaluation of capacity characteristic)**

Using the negative active materials for a rechargeable lithium battery obtained from Example 1, Example 2, Example 3, Comparative Example 1, and Comparative Example 2, each 2016 coin-type half cell was fabricated. It was charged and discharged at 25° C and in 0.5C to measure the first cycle discharge capacity, and the results are shown in the following Table 1.

**(Experimental Example 3: Evaluation of cycle-life characteristic)**

Using the negative active materials for a rechargeable lithium battery obtained from Example 1, Example 2, Example 3, Comparative Example 1, and Comparative Example 2, each 2016 coin-type half cell was fabricated to evaluate the cycle-life characteristics.

The cycle-life characteristics were evaluated by charging and discharging at 25° C in 0.5C for 80 times, and the results are shown in FIG. 3. The capacity retention after 80 cycles was calculated by 80 cycle discharge capacity/first cycle discharge capacity and shown in the following Table 1.

Table 1

| | Peak area ratio of SiC (111) plane and Si (111) plane | Discharge capacity at first cycle (mAh/g) | capacity retention (discharge capacity at 80th cycle / discharge capacity at first cycle) |
|---|---|---|---|
| Example 1 | 0.11 | 1300 | 0.35 |
| Example 2 | 0.23 | 1250 | 0.49 |
| Example 3 | 0.42 | 1177 | 0.76 |
| Comparative Example 1 | < 0.01 | 1470 | 0.06 |
| Comparative Example 2 | 0.58 | 998 | 0.81 |

As shown in Table 1, Comparative Example 1 including insufficient amount of SiC showed bad cycle-life characteristics, and Comparative Example 2 that SiC was excessively produced showed the inferior capacity characteristics. From the results, it is confirmed that the cycle-life characteristics were improved by increasing the SiC content, but when it was excessively produced out of the range suggested by one embodiment of the present invention, the capacity was inadequate. Thereby, when SiC was included within the range suggested by one embodiment of the present invention, both thee capacity and the cycle-life characteristics were simultaneously satisfactory.

## Claims

**1.** A negative active material for a rechargeable lithium battery comprising:

particles comprising a core including grains of silicon in a matrix of $SiO_2$ and a coating layer at least partially coating the core, wherein the coating layer includes SiC and carbon; and
wherein the peak area ratio of SiC (111) plane to Si (111) plane during X-ray diffraction analysis (XRD) using CuK$\alpha$ ray ranges from 0.10 to 0.50.

**2.** A negative active material according to claim 1, wherein the core has a content ratio of $SiO_2$ matrix and grains of silicon represented by $SiO_X$, where $0.3 \leq x \leq 1.2$.

**3.** A negative active material according to claim 1 or 2, wherein the average particle size of the particles is from 0.5 $\mu$m to 50 $\mu$m, optionally from 1 $\mu$m to 10 $\mu$m.

**4.** A negative active material according to any one of claims 1 to 3, wherein the coating layer has a thickness of 0.01 $\mu$m to 1 $\mu$m, optionally from 0.02 $\mu$m to 0.2 $\mu$m.

**5.** A negative active material according to any one of claims 1 to 4, wherein the weight ratio of the core to the coating layer ranges from 99.9:0.1 to 90:10, optionally from 99:1 to 95:5.

**6.** A rechargeable lithium battery comprising:

a negative electrode comprising a negative active material layer including a negative active material as set out in any one of claims 1 to 5;
a positive electrode comprising a positive active material; and
a non-aqueous electrolyte.

**7.** A rechargeable lithium battery according to claim 6, wherein the negative active material layer includes a binder and/or a further conductive material.

**8.** A method of manufacturing a negative active material for a rechargeable lithium battery as claimed in claim 1, the method comprising:

preparing core particles including grains of silicon in a matrix of $SiO_2$;
etching an outer surface of the core particles with an etchant;
at least partially coating the outer surface of the etched core particles with carbon to form a coating layer; wherein the etching satisfies the following:

$$0.14 \leq \text{(etching time)} * \text{(etching strength)} < 144;$$

wherein the etching strength is a molar amount of fluorine ions in the etchant or an equivalent molar amount of an etchant not containing fluorine ions.

**9.** A method according to claim 8, wherein the coating of the outer surface of the core particles with carbon comprises surface-treating the etched core powder using a carbon raw material according to a vapor method or a liquid method to provide the coating layer.

**10.** A method according to claim 9, wherein the surface-treating the etched core powder comprises using a reaction gas of carbon raw material, wherein the surface-treating is performed at from 700° C to 1300° C.

**11.** A method according to claim 9, wherein the surface-treating the etched core powder comprises using liquid coating the outer surface of the core particles with the carbon raw material and the carbonizing at from 800° C to 1300 ° C.

**12.** A method according to any one of claims 8 to 11, wherein the etching of the outer surface of the core particles comprises immersing the core particles in the etchant, optionally comprising immersing the core particles in an etchant for 0.5 minutes to 120 minutes.

**13.** A method according to any one of claims 8 to 12, wherein the etchant is at least one of an acid solution and a solution including fluorine ions.

**14.** A method according claim 13, wherein the etchant is a solution including fluorine ions, and the fluorine ion concentration of the solution is from 0.5M to 15M.

## Patentansprüche

**1.** Negativ-Aktivmaterial für eine wiederaufladbare Lithiumbatterie, umfassend:

Partikel mit einem Kern, umfassend Siliciumkörnchen in einer $SiO_2$-Matrix, und einer Überzugsschicht, die den Kern zumindest teilweise beschichtet, wobei die Überzugsschicht SiC und Kohlenstoff enthält; und
wobei das Peakflächenverhältnis von SiC(111)-Ebene zu Si(111)-Ebene bei der Röntgenbeugungsanalyse (XRD) mit CuK$\alpha$-Strahlung von 0,10 bis 0,50 reicht.

**2.** Negativ-Aktivmaterial nach Anspruch 1, wobei der Kern ein Gehaltsverhältnis von $SiO_2$-Matrix und Siliciumkörnchen aufweist, das durch $SiO_x$ wiedergegeben ist, wobei $0,3 \leq x \leq 1,2$.

**3.** Negativ-Aktivmaterial nach Anspruch 1 oder 2, wobei die mittlere Teilchengröße der Partikel von 0,5 $\mu$m bis 50 $\mu$m, gegebenenfalls von 1 $\mu$m bis 10 $\mu$m, beträgt.

**4.** Negativ-Aktivmaterial nach einem der Ansprüche 1 bis 3, wobei die Überzugsschicht eine Dicke von 0,01 $\mu$m bis 1 $\mu$m, gegebenenfalls von 0,02 $\mu$m bis 0,2 $\mu$m, aufweist.

**5.** Negativ-Aktivmaterial nach einem der Ansprüche 1 bis 4, wobei das Gewichtsverhältnis von Kern zu Überzugsschicht von 99,9:0,1 bis 90:10, gegebenenfalls von 99:1 bis 95:5, reicht.

**6.** Wiederaufladbare Lithiumbatterie, umfassend:

eine negative Elektrode, umfassend eine Schicht eines Negativ-Aktivmaterials mit einem Negativ-Aktivmaterial nach einem der Ansprüche 1 bis 5;

eine positive Elektrode, umfassend ein Positiv-Aktivmaterial; und
einen nichtwässrigen Elektrolyten.

**7.** Wiederaufladbare Lithiumbatterie nach Anspruch 6, wobei die Schicht des Negativ-Aktivmaterials ein Bindemittel und/oder ein weiteres leitfähiges Material enthält.

**8.** Verfahren zur Herstellung eines Negativ-Aktivmaterials für eine wiederaufladbare Lithiumbatterie nach Anspruch 1, wobei das Verfahren umfasst:

Herstellen von Kernpartikeln, umfassend Siliciumkörnchen in einer $SiO_2$-Matrix;
Ätzen einer Außenfläche der Kernpartikel mit einem Ätzmittel;
zumindest teilweises Beschichten der Außenfläche der geätzten Kernpartikel mit Kohlenstoff zum Bilden einer Überzugsschicht; wobei das Ätzen Folgendes erfüllt:

$$0{,}14 \leq (\text{Ätzdauer}) * (\text{Ätzstärke}) < 144;$$

wobei die Ätzstärke einer Molmenge an Fluorionen in dem Ätzmittel oder einer äquivalenten Molmenge eines Ätzmittels, das keine Fluorionen enthält, entspricht.

**9.** Verfahren nach Anspruch 8, wobei das Beschichten der Außenfläche der Kernpartikel mit Kohlenstoff die Oberflächenbehandlung des Pulvers aus geätzten Kernen mit einem Kohlenstoff-Ausgangsmaterial nach einem Dampfverfahren oder einem Flüssigkeitsverfahren zum Bereitstellen der Überzugsschicht umfasst.

**10.** Verfahren nach Anspruch 9, wobei die Oberflächenbehandlung des Pulvers aus geätzten Kernen die Verwendung eines Reaktionsgases eines Kohlenstoff-Ausgangsmaterials umfasst, wobei die Oberflächenbehandlung bei 700 °C bis 1300 °C durchgeführt wird.

**11.** Verfahren nach Anspruch 9, wobei die Oberflächenbehandlung des Pulvers aus geätzten Kernen die Anwendung einer Flüssigkeitsbeschichtung der Außenfläche der Kernpartikel mit dem Kohlenstoff-Ausgangsmaterial und das Karbonisieren bei 800 °C bis 1300 °C umfasst.

**12.** Verfahren nach einem der Ansprüche 8 bis 11, wobei das Ätzen der Außenfläche der Kernpartikel das Tauchen der Kernpartikel in das Ätzmittel umfasst, gegebenenfalls umfassend das Tauchen der Kernpartikel in ein Ätzmittel über 0,5 Minuten bis 120 Minuten.

**13.** Verfahren nach einem der Ansprüche 8 bis 12, wobei das Ätzmittel mindestens eine Säurelösung und eine Lösung mit Fluorionen ist.

**14.** Verfahren nach Anspruch 13, wobei das Ätzmittel eine Fluorionen enthaltende Lösung ist und die Fluorionenkonzentration der Lösung von 0,5 M bis 15 M beträgt.

## Revendications

**1.** Matériau actif négatif pour une batterie au lithium rechargeable comprenant :

des particules qui comprennent un noyau comportant des grains de silicium dans une matrice de $SiO_2$ et une couche de revêtement recouvrant au moins partiellement le noyau, où la couche de revêtement comporte du SiC et du carbone ; et
où le rapport d'aire des pics du plan de SiC (111) sur le plan de Si (111) pendant une analyse par diffraction des rayons X (XRD) utilisant des rayons CuK$\alpha$ se trouve dans la plage allant de 0,10 à 0,50.

**2.** Matériau actif négatif selon la revendication 1, dans lequel le noyau a un rapport de teneur de matrice de $SiO_2$ et de grains de silicium représenté par $SiO_x$, où $0{,}3 \leq x \leq 1{,}2$.

**3.** Matériau actif négatif selon la revendication 1 ou 2, dans lequel la dimension moyenne de particules des particules

est de 0,5 μm à 50 μm, facultativement de 1 μm à 10 μm.

**4.** Matériau actif négatif selon l'une quelconque des revendications 1 à 3, dans lequel la couche de revêtement a une épaisseur de 0,01 μm à 1 μm, facultativement de 0,02 μm à 0,2 μm.

**5.** Matériau actif négatif selon l'une quelconque des revendications 1 à 4, dans lequel le rapport en poids du noyau sur la couche de revêtement se trouve dans la plage allant de 99,9:0,1 à 90:10, facultativement de 99:1 à 95:5.

**6.** Batterie au lithium rechargeable comprenant :

une électrode négative comprenant une couche de matériau actif négatif comportant un matériau actif négatif selon l'une quelconque des revendications 1 à 5 ;
une électrode positive comprenant un matériau actif positif ; et
un électrolyte non aqueux.

**7.** Batterie au lithium rechargeable selon la revendication 6, dans laquelle la couche de matériau actif négatif comporte un liant et/ou un matériau conducteur supplémentaire.

**8.** Procédé de fabrication d'un matériau actif négatif pour une batterie au lithium rechargeable tel que revendiqué dans la revendication 1, le procédé comprenant le fait :

de préparer des particules de noyau comportant des grains de silicium dans une matrice de $SiO_2$;
de graver une surface extérieure des particules de noyau avec un agent de gravure ;
de revêtir au moins partiellement la surface extérieure des particules de noyau gravées avec du carbone pour former une couche de revêtement ; où la gravure satisfait l'expression suivante :

$$0,14 \leq (\text{temps de gravure}) * (\text{force de gravure}) < 144 ;$$

où la force de gravure est une quantité molaire d'ions fluor dans l'agent de gravure ou une quantité molaire équivalente d'un agent de gravure ne contenant pas d'ions fluor.

**9.** Procédé selon la revendication 8, dans lequel le revêtement de la surface extérieure des particules de noyau avec du carbone comprend le fait de traiter en surface la poudre de noyau gravée en utilisant une matière première de carbone selon un procédé en phase vapeur ou un procédé en phase liquide pour fournir la couche de revêtement.

**10.** Procédé selon la revendication 9, dans lequel le traitement de surface de la poudre de noyau gravée comprend l'utilisation d'un gaz de réaction d'une matière première de carbone, où le traitement de surface est effectué à une température comprise entre 700°C et 1300°C.

**11.** Procédé selon la revendication 9, dans lequel le traitement de surface de la poudre de noyau gravée comprend l'utilisation d'un revêtement en phase liquide de la surface extérieure des particules de noyau avec la matière première de carbone et la carbonisation à une température comprise entre 800°C et 1300°C.

**12.** Procédé selon l'une quelconque des revendications 8 à 11, dans lequel la gravure de la surface extérieure des particules de noyau comprend le fait d'immerger les particules de noyau dans l'agent de gravure, comprenant facultativement le fait d'immerger les particules de noyau dans un agent de gravure pendant 0,5 minute à 120 minutes.

**13.** Procédé selon l'une quelconque des revendications 8 à 12, dans lequel l'agent de gravure est au moins l'une d'une solution acide et d'une solution comportant des ions fluor.

**14.** Procédé selon la revendication 13, dans lequel l'agent de gravure est une solution comportant des ions fluor, et la concentration en ions fluor de la solution est de 0,5 M à 15 M.

FIG. 1

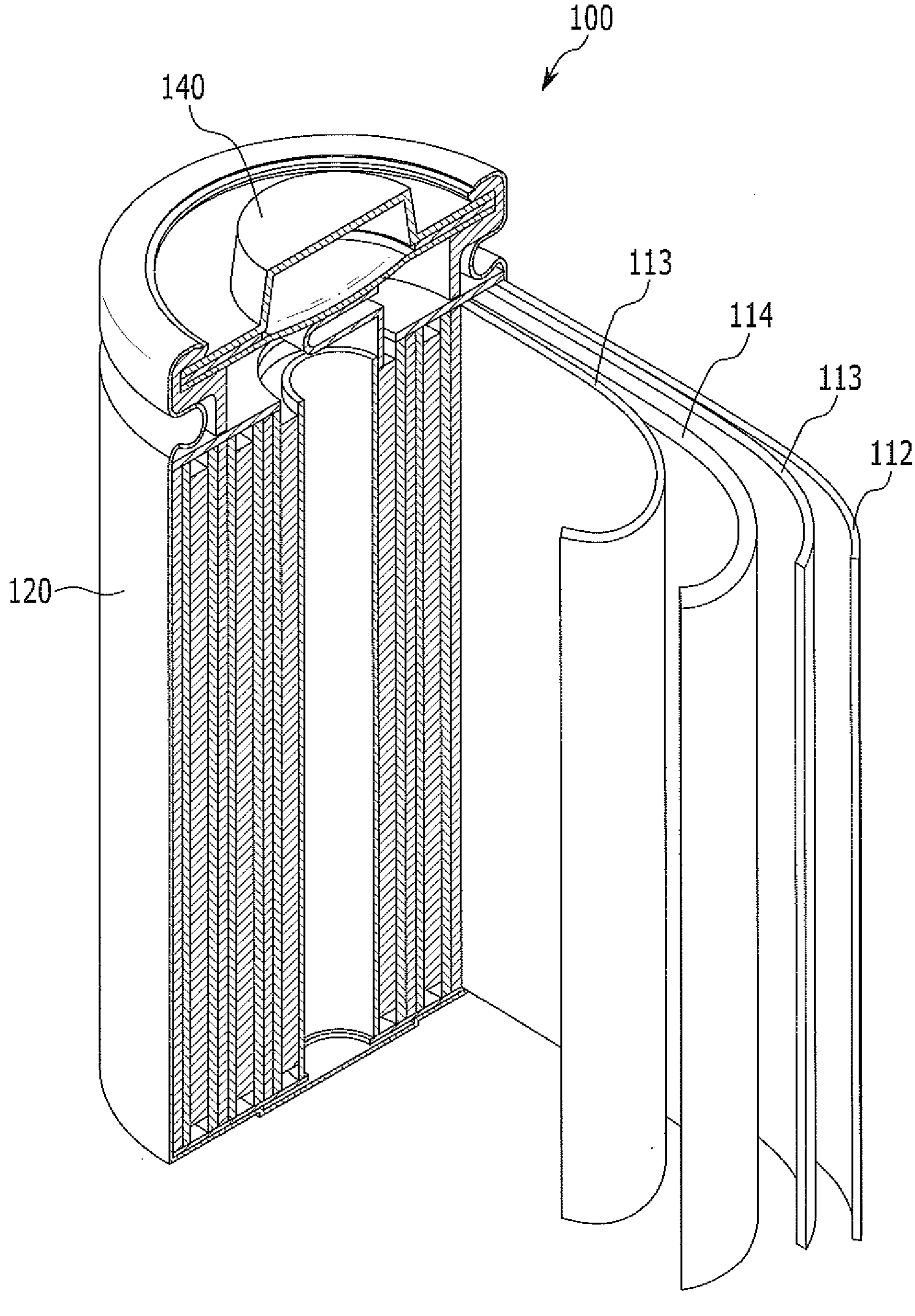

FIG. 2

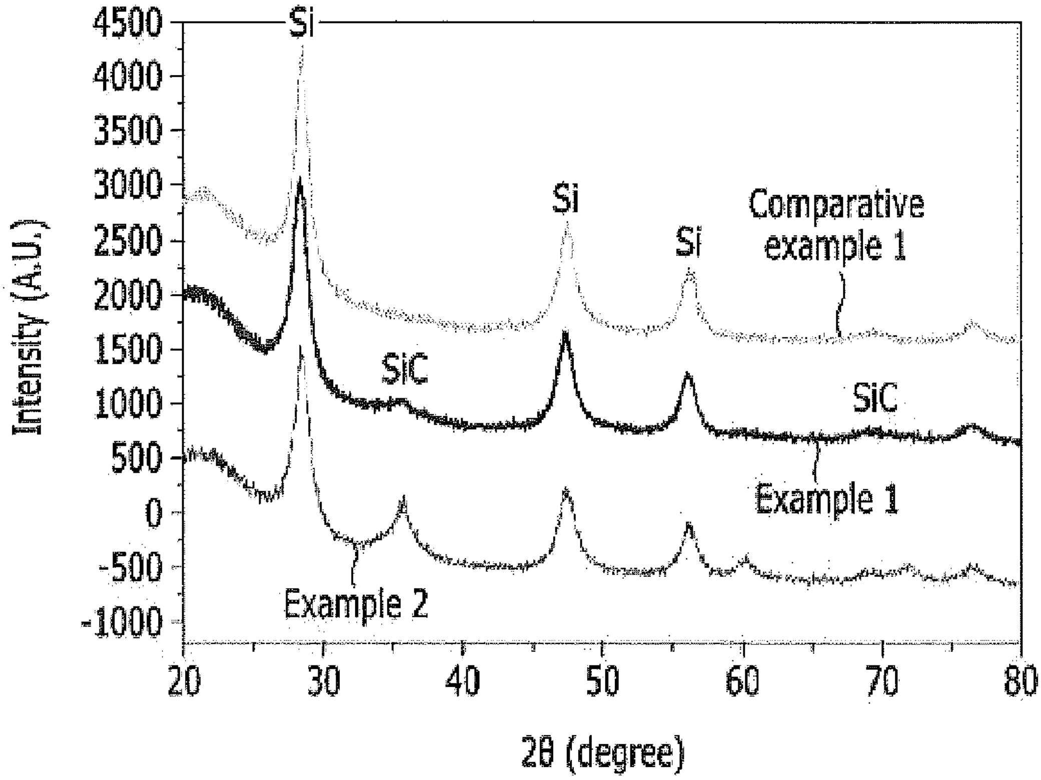
Si
Si
Si
Comparative example 1
SiC
SiC
Example 1
Example 2
Intensity (A.U.)
4500
4000
3500
3000
2500
2000
1500
1000
500
0
-500
-1000
20
30
40
50
60
70
80
2θ (degree)

FIG. 3

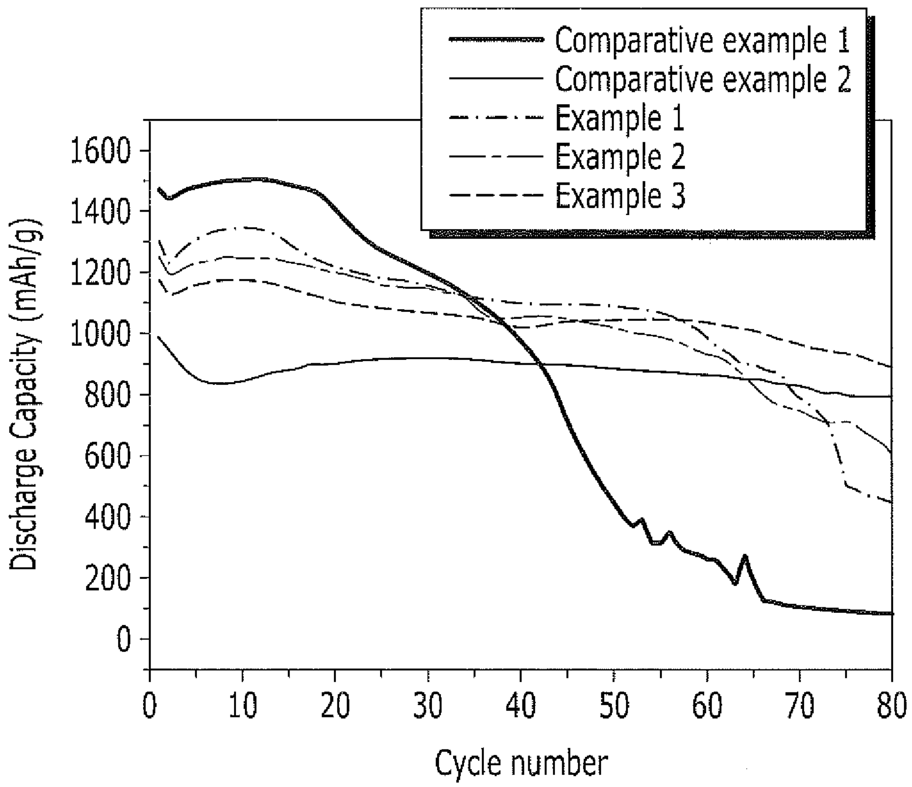
Comparative example 1
Comparative example 2
Example 1
Example 2
Example 3
1600
1400
1200
1000
800
600
400
200
0
Discharge Capacity (mAh/g)
0
10
20
30
40
50
60
70
80
Cycle number

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2372816 A
- EP 2372817 A
- US 20020164479 A